# EUROPEAN PATENT APPLICATION

(11) **EP 4 797 864 A1**
(43) Date of publication of application: **26.08.2026**
(21) Application number: 24886306.0
(22) Date of filing: 31.10.2024
(51) Int. Cl.: H04W 76/22, H04L 41/0894, H04W 40/24, H04W 88/14, H04W 72/12

(54) **METHOD AND APPARATUS FOR PROVIDING UE POLICY IN WIRELESS COMMUNICATION SYSTEM**

(30) Priority: 02.11.2023 KR 20230150303
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2024/016939
(87) International publication number: WO 2025/095634

(57) **Abstract**

The present disclosure relates to a 5G or 6G communication system for supporting higher data transmission rates. A method performed by a first policy control function (PCF) entity for user equipment in a wireless communication system comprises the steps of: transmitting a first message for requesting registration to a binding support function (BSF) entity; transmitting, to the BSF entity, a second message for requesting subscription to an event in which a second PCF for session management is registered with the BSF entity; receiving, from the BSF entity, a third message for notifying that the second PCF has been registered with the BSF entity; and transmitting, to the second PCF, a fourth message for requesting a report on whether a protocol data unit (PDU) session or packet data network (PDN) connection for user equipment capable of receiving a terminal policy in an evolved packet system (EPS) is ongoing.

## Description

### [Technical Field]

The disclosure relates to a method and apparatus for providing a UE policy in a wireless communication system or a mobile communication system and, particularly, to a method and apparatus for providing a UE policy in a hybrid mobile communication system having different communication protocols.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

5GS currently in the process of commercialization, as well as LTE and LTE-A systems that provide mobile communication services, are all mobile communication systems that provide packet-based services. 5GS is being developed to support interworking with an evolved packet system (EPS) based on LTE and LTE-A. In a 5G system, a 5G core network provides a UE policy to a UE.

In the 5G system, when a UE capable of using wireless communication via 5GS and EPS is connected to a network via a 5GS that supports EPS/5GS interworking, and then moves a network connection to an EPS, the 5G core network no longer provides a new UE policy to the UE, and the UE communicates with the network based on a UE policy provided by the core network before moving to the EPS.

In the 5G system, when a UE policy or information related to the UE policy is changed in the 5G core network after the UE supporting EPS/5GS interworking moves from the 5GS to the EPS, there is a problem in that the changed UE policy may not be transmitted to the UE via an EPS entity.

Therefore, the disclosure provides a method and apparatus for providing a UE policy to a UE when the UE has moved from a 5GS to an EPS in a 5G system that supports EPS/5GS interworking.

### [Solution to Problem]

In addition, the disclosure provides a method and apparatus for selecting a session to be used to provide a UE policy to a UE when the UE has moved from a 5GS to an EPS in a 5G system supporting EPS/5GS interworking.

A method for processing a control signal in a wireless communication system according to the disclosure may include receiving a first control signal transmitted from a network entity, processing the received first control signal, and transmitting, to the network entity, a second control signal generated based on the processing.

### [Advantageous Effects of Invention]

According to an apparatus and method according to various embodiments of the disclosure, a method and apparatus for providing a UE policy to a UE when the UE has moved from a 5GS to an EPS in a 5G system supporting EPS/5GS interworking may be provided.

According to an apparatus and method according to various embodiments of the disclosure, when a UE is in a state connected to an EPS and a UE policy is changed in a core network, the UE may receive the changed UE policy without moving again to a 5GS, thereby reducing a waste of resource, blocking incorrect network access, and increasing communication stability.

In addition, advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates a network architecture and interfaces of a 5G system according to an embodiment of the disclosure.
FIG. 2 is a diagram illustrating a network structure and interfaces of an EPS/5GS interworking system according to an embodiment of the disclosure.
FIG. 3 is a diagram illustrating a network structure and interfaces related to a policy control and a charge control system of a 5G system according to an embodiment of the disclosure.
FIG. 4 is a diagram illustrating a method in which a core network transfers a UE policy to a UE in an EPS/5GS interworking system according to an embodiment of the disclosure.
FIG. 5 illustrates a structure of an SMF+PGW-C 500 according to an embodiment of the disclosure.
FIG. 6 illustrates a structure of a PCF 600 according to an embodiment of the disclosure.
FIG. 7 illustrates a structure of a UE according to an embodiment of the disclosure.
FIG. 8 illustrates a structure of a network entity according to an embodiment of the disclosure.

### [Mode for the Invention]

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system defined by 3GPP is called a "new radio (NR) system".

The 5G communication system is considered to be implemented in ultrahigh frequency (mmWave) bands, (e.g., 60GHz bands) so as to accomplish higher data rates. To decrease propagation loss of the radio waves and increase the transmission distance, the beamforming, massive multiple-input multiple-output (MIMO), full dimensional MIMO (FD-MIMO), array antenna, an analog beam forming, large scale antenna techniques have been discussed in 5G communication systems and applied to the NR system.

In addition, in the 5G communication system, technical development for system network improvement is under way based on evolved small cells, advanced small cells, cloud radio access networks (cloud RANs), ultra-dense networks, device-to-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that, in the following description, only parts required to understand operations according to various embodiments will be described and a description of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

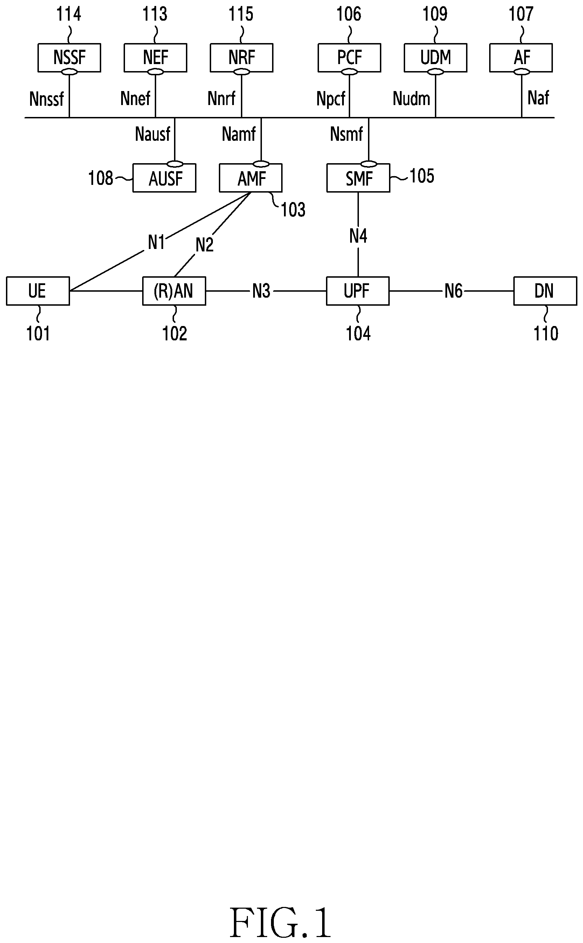

FIG. 1 illustrates a network architecture and interfaces of a 5G system according to an embodiment of the disclosure.

Network entities included in the network architecture of the 5G system in FIG. 1 may include network functions (NFs), depending on system implementations.

Referring to FIG. 1, the network architecture of the 5G system 100 may include various network entities. For example, the 5G system 100 may include an authentication server function (AUSF) 108, an access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, an edge application service domain repository (EDR) (not illustrated), an edge application server (EAS) (not illustrated), an EAS discovery function (EASDF) (not illustrated), a user plane function (UPF) 104, a (radio) access network (R)AN) 102, and a user equipment (UE) (or terminal) 101.

The respective NFs of the 5G system 100 support the following functions.

The ASUF 108 may process and store data for authentication of the UE 101.

AMF 103 may provide a function for access and mobility management on a per-UE basis, and basically, one UE may be connected to one AMF. Specifically, the AMF 103 may support functions such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for an AMF event and an interface to an LI system), delivery of session management (SM) messages between the UE and the SMF, a transparent proxy for session management (SM) message routing, access authentication, access authorization including roaming permission checking, delivery of SMS messages between the UE and a short message service function (SMSF), a security anchor function (SAF), and/or security context management (SCM). Some or all of the functions of the AMF 103 may be supported within a single instance of one AMF.

The DN 110 may refer to, for example, an operator service, Internet access, a third-party service, or the like. The DN 110 may transmit a downlink protocol data unit (PDU) to the UPF 104, or may receive, from the UPF 104, a PDU transmitted from the UE 101.

The PCF 106 may receive information regarding packet flows from an application server and may provide functions of determining policies such as mobility management, session management, and the like. Specifically, the PCF 106 may support functions, such as supporting a unified policy framework for control of network operations, providing policy rules so as to allow control plane function(s) (e.g., AMF, SMF, etc.) to enforce the policy rules, and implementing a front end for access to relevant subscription information for policy decisions in a user data repository (UDR).

The SMF 105 may provide a session management function and may be managed by a different SMF for each session when the UE has multiple sessions. Specifically, the SMF 105 supports functions, such as session management (e.g., session establishment, modification, and release, including the maintenance of a tunnel between the UPF 104 and the (R)AN 102 node), UE IP address assignment and management (optionally including authentication), selection and control of a UP function, configuration of traffic steering for routing traffic to a proper destination from the UPF 104, termination of an interface toward policy control functions, execution of a control part of a quality of service (QoS) and a policy, lawful interception (for an SM event and an interface to an LI system), termination of the SM part of a NAS message, downlink data notification, an initiator of AN-specific SM information (transferred to the (R)AN 102 through N2 via the AMF 103), determination of an SSC mode of a session, and a roaming function. Some or all of the functions of the SMF 105 may be supported within a single instance of one SMF.

The UDM 109 stores the user's subscription data, policy data, and the like. The UDM 109 may include two parts, that is, an application front end (FE) (not illustrated) and a user data repository (UDR) (not illustrated).

The FE may include a UDM FE configured to handle position management, subscription management, credential processing, and the like, and a PCF configured to handle policy control. The UDR may store data required for the functions provided by the UDM-FE and policy profiles required by the PCF. The data stored in the UDR may include policy data, and user subscription data including subscription identifiers, security credentials, access- and mobility-related subscription data, and session-related subscription data. The UDM-FE may support functions, such as access to subscription information stored in the UDR, authentication credential processing, user identification handling, access authentication, registration/mobility management, subscription management, and SMS management.

The UPF 104 transfers a downlink PDU, received from the DN 110, to the UE 101 via the (R)AN 102, and transfers an uplink PDU, received from the UE 101, to the DN 110 via the (R)AN 102. Specifically, the UPF 105 may support functions, such as an anchor point for intra-/inter-RAT mobility, an external PDU session point for interconnection to a data network, packet routing and forwarding, a user plane part of packet inspection and policy rule enforcement, lawful intercept, and traffic usage reporting, an uplink classifier for supporting routing of traffic flows to the data network, a branching point for supporting multi-homed PDU sessions, QoS handling (e.g., packet filtering, gating, and uplink/downlink rate enforcement) for a user plane, uplink traffic verification (SDF mapping between a service data flow (SDF) and a QoS flow), transport-level packet marking within an uplink and downlink, downlink packet buffering, and downlink data notification triggering. Some or all of the functions of the UPF 104 may be supported within a single instance of one UPF.

The AF 107 may interwork with a 3GPP core network in order to provide services (e.g., support such functions as an application influence on traffic routing, access to network capability exposure, and interworking with a policy framework for policy control).

The (R)AN 102 may generally refer to new radio access networks that support both evolved E-UTRA, which is an evolved version of 4G radio access technology, and new radio (NR) technology (e.g., gNB).

The gNB may support functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. The user equipment may be referred to as such terms as "terminal", "mobile equipment (ME)", or "mobile station (MS)". In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 113 may provide a means for securely exposing services and capabilities, provided by 3GPP network functions, for 3rd parties, internal exposure/re-exposure, application functions, and edge computing, for example. The NEF 113 receives information from other NF (s) (based on the exposed capability(s) of the other NF (s)). The NEF 113 may store the received information as structured data using a standardized interface to a data storage network function. The stored information may be re-exposed to other NF(s) and AF(s) by the NEF 113, and may be used for other purposes, such as analysis.

The NRF 115 may support a service discovery function. The NRF 115 receives an NF discovery request from an NF instance, and provides information on a discovered NF instance to the NF instance. In addition, the NRF 115 maintains available NF instances and services supported by the available NF instances.

Although FIG. 1 illustrates a reference model for a case where the UE accesses one DN by using one PDU session for the sake of descriptive convenience, the disclosure is not limited thereto.

The UE 101 may concurrently access two (i.e., local and central) data networks by using multiple PDU sessions. In this case, two SMFs may be selected for different PDU sessions. However, each SMF may have capability to control both the local UPF and central UPF in the PDU session.

In addition, the UE 101 may concurrently access two (i.e., local and central) data networks provided in a single PDU session.

The NSSF 114 may select a set of network slice instances serving the UE 101. In addition, the NSSF 114 may determine allowed network slice selection assistance information (NSSAI), and perform mapping to subscribed single-network slice selection assistance information (S-NSSAI) when necessary. In addition, the NSSF 114 may determine configured NSSAI, and perform mapping to the subscribed S-NSSAI, as necessary. In addition, the NSSF 114 may determine an AMF set used to serve the UE, or may determine a list of candidate AMFs by asking the NRF 115 according to a configuration.

The NRF 115 supports a service discovery function. The NRF 115 receives an NF discovery request from an NF instance, and provides information on a discovered NF instance to the NF instance. In addition, the NRF 115 maintains available NF instances and services supported by the available NF instances.

In 3GPP systems, conceptual links connecting NFs in the 5G system are defined as reference points. In the following, examples of reference points included in the 5G system architecture described in FIG. 1 are provided below.
- N1: A reference point between a UE and an AMF
- N2: A reference point between an (R)AN and an AMF
- N3: A reference point between an (R)AN and a UPF
- N4: A reference point between an SMF and a UPF
- N5: A reference point between a PCF and an AF
- N6: A reference point between a UPF and a data network
- N7: A reference point between an SMF and a PCF
- N8: A reference point between a UDM and an AMF
- N9: A reference point between two core UPFs
- N10: A reference point between a UDM and an SMF
- N11: A reference point between an AMF and an SMF
- N12: A reference point between an AMF and an AUSF
- N13: A reference point between a UDM and an authentication server function (AUSF)
- N14: A reference point between two AMFs
- N15: A reference point between a PCF and an AMF for a non-roaming scenario, and a reference point between a PCF and an AMF in a visited network for a roaming scenario

In the following descriptions, a UE may refer to the UE 101, and the terms "UE" and "terminal" may be used interchangeably. In this case, unless specifically defined additionally, a UE should be understood as the UE 101.

**[Table 1]**

| URSP Rules | | | | | | | |
|---|---|---|---|---|---|---|---|
| P | Traffic Descriptor (TD) | P | Route Selection Component (RSC) | | | | |
| | APPID, DNN, IP, FQDN, CC | | S-NSSAI | DNN | SSC Mode | PDU-Type | Access-Type |
| 1 | App#1 | 1 | S-NSSAI#1 | DNN#1 | SSC#3 | IPv4 | 3GPP |
| 2 | App#2 | 1 | S-NSSAI#2 | DNN#2 | SSC#1 | IPv4/v6 | 3GPP |
| | | 2 | S-NSSAI#2 | DNN#2 | - | - | Non-3GPP |
| 4 | App#1, CC=internet, supl | 1 | S-NSSAI#1 | DNN#1 | - | - | Non-3GPP |
| 5 | App#3, CC=ims | 1 | S-NSSAI#3 | DNN#3 | - | - | Multi-Access |
| 6 | App#1 | 1 | S-NSSAI#1 | DNN#1 | - | - | Multi-Access |
| 7 | *(match all) | 1 | S-NSSAI#4 | DNN#4 | SSC#3 | - | - |

Table 1 shows an example of a URSP rule.

In a 5GC, a PCF may provide policy information to a UE, and UE policy information may include a UE route selection policy (URSP).

The URSP may be used by the UE, and may be used to determine whether an application detected by the UE is capable of being associated with a PDU session that has already been established, is capable of being offloaded to a non-3GPP access existing outside the PDU session, or is capable of being routed via a ProSe Layer-3 UE-to-network relay existing outside the PDU session, or is capable of being associated with a new PDU session after establishing the new PDU session, or the like. The URSP may include one or more URSP rules, and a single URSP rule may include a single traffic descriptor and one or more route selection components (RSC). [Table 1] is an example of a URSP rule.

A traffic descriptor (TD) may include matching criteria for identifying a detected application or traffic of the application. Detailed examples are as follows.
a) Application descriptor: may indicate an application of a UE. For example, the application descriptor may include an APPID composed of an OSID and an OSAPPID.
b) IP descriptor: shows an IP address that indicates a destination address of an IP packet transmitted by a UE. This may include an IP 3-tuple, i.e., an IP destination address, a port number, and a protocol.
c) Domain descriptor: indicates a destination address of a server to which a UE connects in the form of a fully qualified domain name (FQDN).
d) Non-IP descriptor: indicates a receiver of Non-IP data.
e) DNN: indicates a data network name.
f) Connection capability (CC): refers to type information capable of specifying a characteristic of connected traffic, and may have a value such as IP multimedia subsystem (IMS), multimedia message service (MMS), or Internet.

The route selection component (RSC) may include attribute information of a PDU session, which is to be used for determining, when a traffic descriptor capable of identifying an application detected by the UE is specified, a PDU session to which the application or application traffic is to be associated with. Detailed examples are as follows.
a) SSC mode selection: This is an element indicating session and service continuity (SSC), and may have a value of SSC mode 1, SSC mode 2, or SSC mode 3.
b) Network Slice Selection: indicates a network slice.
c) DNN Selection: indicates a data network name.
d) PDU session type selection: indicates a type of PDU session capable of specifying IPv4, IPv6 or IPv4v6, or Ethernet, or non-IP.
e) Non-seamless offload indication: indicates that application traffic may be offloaded via non-3GPP access existing outside of a PDU session.
f) ProSe layer-3 UE-to-network relay offload indication: indicates that application traffic may be offloaded via a ProSe layer-3 UE-to-network relay existing outside a PDU session.
g) Access type preference: indicates whether a PDU session is a PDU session connected through 3GPP access, a session connected through non-3GPP access, or a session supporting a multi-access connection using both 3GPP access and non-3GPP access.
h) PDU session pair ID: indicates an identifier for which application traffic is shared in a redundant PDU session.
i) Redundancy sequence number (RSN): indicates an identifier used for redundant transmission.

A plurality of URSP rules may be distributed in policy sections (PSs) of a UE policy container. In an embodiment of the disclosure, a plurality of URSP rules may be distributed in a plurality of policy sections so as not to exceed a maximum allowable transmission size in a NAS layer. A single URSP rule may not be distributed into two PSs. A single intact URSP rule may need to be included in one policy section.

The USRP rule has a priority order for each rule. According to an embodiment of the disclosure, each URSP rule may include a URSP rule identifier for identifying a URSP rule. More specifically, the URSP rule identifier may refer to a traffic parameter that allows a UE to distinguish UE applications.

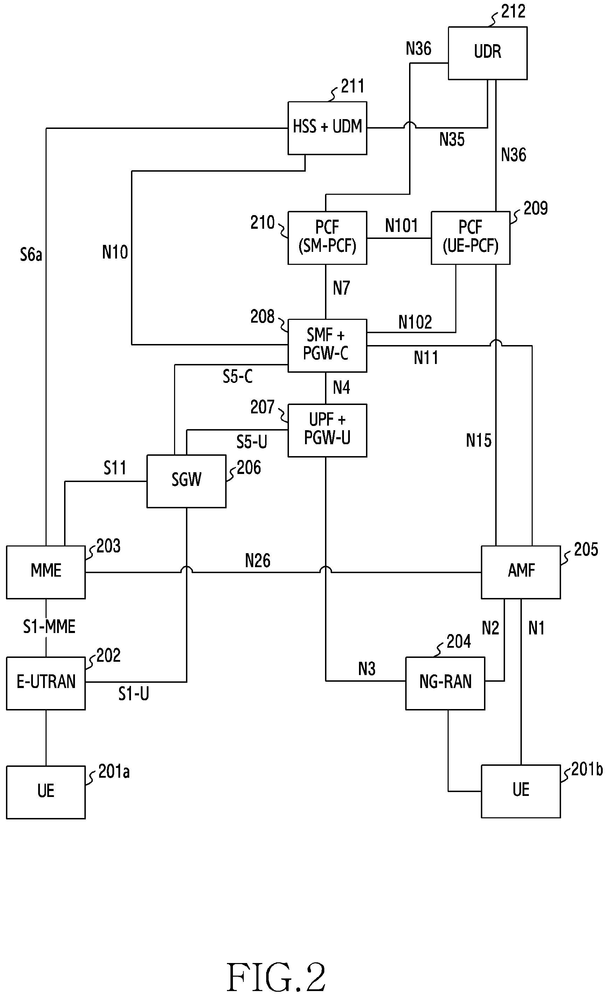

FIG. 2 is a diagram illustrating a network structure and an interface of a wireless communication system (e.g., EPS/5GS interworking system) according to an embodiment of the disclosure.

A 5GS may include a New Radio (NR) base station (NG-radio access node (NG-RAN) or next generation node B (gNB)) 204 for radio access of a user equipment (UE) 201b, and an access and mobility management function (AMF) 205. In addition, although not illustrated in FIG. 2, may include a session management function (SMF), a user plane function (UPF), a policy control function (PCF), a network slice selection function (NSSF), a unified data management (UDM), a unified data repository (UDR), or the like.

An EPS may include an E-UTRA base station 202 (e-volved universal mobile telecommunications system (UMTS) terrestrial radio access network (E-UTRAN)) or evolved node B (eNB)) for radio access of a user equipment (UE) 201a, a mobility management entity (MME) 203, a serving gateway (SGW) 206, a packet data network gateway (PGW) (PGW may be composed of a PGW-U and a PGW-C), a policy and charging rule function (PCRF), and/or home subscriber server (HSS), or the like.

According to an embodiment, the AMF 205 and the MME 203 may be a network function (NF) that manages radio network access and mobility for a UE. The SMF, SGW, and PGW are NFs that manage a session for a UE, and session information may include quality of service (QoS) information, charging information, and/or information associated with packet processing. In addition, the UPF and PGW are NFs that process user plane traffic (e.g., user plane traffic), and may be controlled by the SMF and SGW. The PCF and the PCRF are NFs that manage an operator policy (operator policy and/or PLMN policy) for providing a service in a wireless communication system. In addition, the PCF may be classified as a PCF in charge of an access and mobility (AM) policy and UE policy, and a PCF in charge of a session management (SM) policy. The PCF in charge of AM/UE policy and the policy in charge of SM policy may be logically or physically separated NFs or may be an NF that is logically or physically one. The UDM and the HSS may be NFs that store and manage UE subscriber information (UE subscription) of a UE. The UDR may be an NF or database (DB) that stores and manages data. The UDR 212 may store subscription information of a UE and provide subscription information of a UE to the UDM. In addition, the UDR 212 may store operator policy information and provide operator policy information to the PCF. The NSSF may be an NF that performs a function of selecting network slice instances serving a UE or determining network slice selection assistance information (NSSAI).

An instance may refer to a state in which an NF exists in the form of software code, and, a physical and/or logical resource is allocated from a physical computing system (e.g., predetermined computing system existing in a core network) to perform a function of the NF in the computing system, and the function of the NF is executable. For example, an AMF instance, an SMF instance, an NSSF instance, or the like may be states of being assigned with physical and/or logical resources for an AMF operation, an SMF operation, an NSSF operation, or the like, respectively, from a predetermined computing system existing in the core network, and capable of using the same. Therefore, an AMF instance, an SMF instance, and an NSSF instance that use physical and/or logical resources allocated from a predetermined computing system existing in a network for AMF, SMF, and NSSF operations may perform the same operation as the case in which a physical AMF device, a physical SMF device, and a physical NSSF device exist.

The UDM of the 5GS and the HSS of the EPS may be configured as one combo node (referred to as a UDM+HSS) 211. The UDM+HSS node 211 may store UE subscriber information. The SMF of the 5GS and the PGW-C of the EPS may be configured as one combo node (referred to as an SMF+PGW-C) 208. The PCF of the 5GS and the policy control and charging rules function (PCRF) of the EPS may be configured as one combo node (referred to as a PCF+PCRF). The UPF of the 5GS and the PGW-U of the EPS may be configured as one combo node (referred to as a UPF+PGW-U) 207. The UE may access the MME 203 of the EPS through an E-UTRA base station and use an EPS network service. In addition, the UE may access the AMF 205 of the 5GS through an NR base station and use a 5GS network service. In FIG. 2, the same reference numerals are used for a UE that accesses the EPS and a UE that accesses the 5GS. This is to indicate that the UE is a UE that may access the EPS and also access the 5GS.

As such, one NF or network entity may simultaneously support different network systems, and the NF, network node, or network entity may be referred to as a combo node, a combo NF, a combined node, a combined NF, an interworking node, an interworking NF, or the like as described above. In addition, the functions of the NFs illustrated as combo nodes may be implemented via interworking between two or more network entities. In addition, for ease of description, an NF that simultaneously supports different network systems may be expressed using symbols "+" or "/." For example, when an SMF and a PGW-C are configured as one combo node, it may be expressed as a PGW-C/SMF, PGW-C+SMF, SMF/PGW-C, or SMF+PGW-C.

The UE 201a or 201b may access a data network (e.g., a network providing internet services) via the 5GS or EPS system and establish a session. In this instance, the UE may distinguish each data network by using an identifier, such as a data network name (DNN) or an access point name (APN). In order to distinguish data networks, a DNN may be used in the 5GS, and an APN may be used in the EPS. The DNN and the APN may be used to determine an NF related to a user plane, an inter-NF interface, an operator policy, and the like when a UE connects a session with a network system. The DNN and the APN may be understood as equivalent information, and may transfer the same information. The DNN, for example, may be used for selecting an SMF and UPF(s) for a PDU session, and may be used for selecting an interface(s) (e.g., N6 interface) between a data network and a UPF for a PDU session. In addition, the DNN may be used to determine a mobile communication operator's policy to be applied to a PDU session.

In the following embodiments, combo nodes, such as a UDM+HSS node, a PCF+PCRF node, a SMF+PGW-C node, a UPF+PGW-C node, and the like may be described without using the name "node, " for ease of description. In the following embodiments, a definition of a message defined in one embodiment may be applied as the same meaning in other embodiments that use the same message.

The PCF may be distinguished as a session management-policy control (SM-PCF) 210 that is in charge of a session management policy (SM policy) and a UE-policy control function (UE-PCF) 209 that is in charge of a mobility management policy (AM policy) and/or UE policy. The SM-PCF 210 may be connected to the SMF 208 via an N7 interface, and may not be connected to the AMF 205. In other words, the SM-PCF 210 may not support an N15 interface. The UE-PCF 209 may be connected to the AMF 205 via the N15 interface and may not be connected to the SMF 208. In other words, the UE-PCF 209 may not support the N7 interface. The SM-PCF and the UE-PCF may be located in one device or one PCF, physically and/or logically, but may be distinguished as different PCF instances.

A UE policy that the PCF provides to a UE may include an access network discovery and selection policy (ANDSP), a UE route selection policy, a vehicle-to-everything (V2X) policy, and/or a ProSe policy.

Access network discovery & selection policy (ANDSP): may include policy information required when a UE selects a non-3GPP access network.

UE Route Selection Policy (URSP): may include policy information necessary for routing traffic going out of a UE.

V2X policy (V2XP): may include policy information for providing a configuration parameter required for a UE to perform V2X communication.

ProSe policy (ProSeP): may include policy information that provides a configuration parameter required for a UE to perform ProSe direct discovery, ProSe direct communication, or ProSe UE-to-Network relay and remote UE communication.

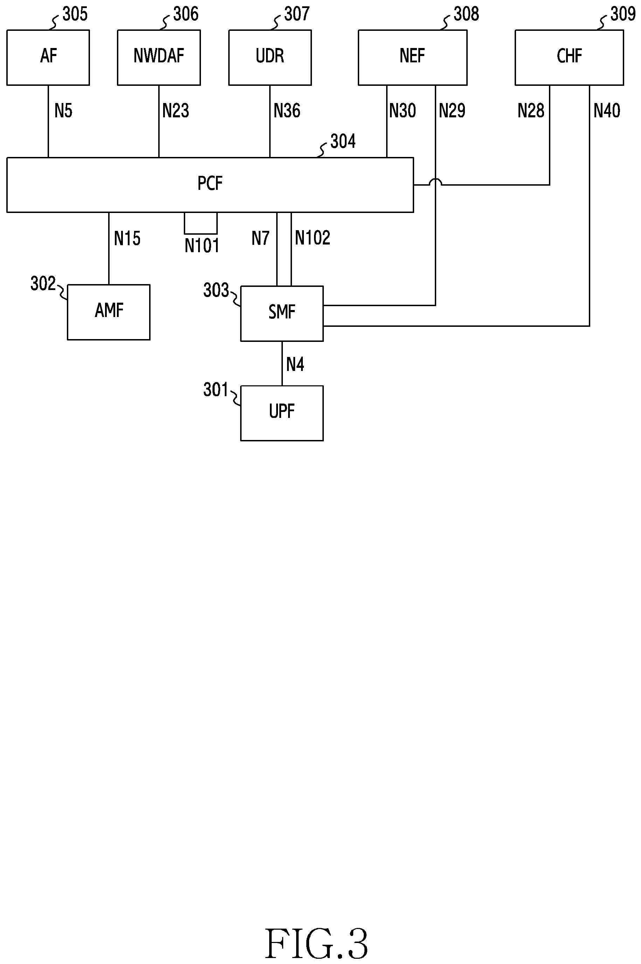

FIG. 3 is a diagram illustrating a network structure and interfaces related to a policy control and a charge control system of a 5G system according to an embodiment of the disclosure.

A policy control function (PCF) 304 may act as an integrated control framework for controlling a network operation.

An application function (AF) 305 may provide session-related information to a charging function in order to support rule generation.

A network data analytics function (NWDAF) 306 may collect data from an NF included in a core network. In this case, the NWDAF and a counterpart NF need to belong to the same PLMN.

A unified data repository (UDR) 307 may provide subscriber information data (subscription data), policy data, structured data for exposure, and/or application data to a UDM (not shown), the PCF 304, an NEF 308, and the like.

The network exposure function (NEF) 308 may serve a role of securely exposing a network service and function.

A charging function (CHF) 309 may communicate with a 5G core network and may provide a charging system related to the use of a network resource.

One PCF instance may not support N15 and N7 at the same time.
- N15: A reference point between an AMF 302 and the PCF 304.
- N7: A reference point between an SMF 303 and the PCF 304.
- N4: A reference point between the SMF 303 and a UPF 301.
- N5: A reference point between the AF 305 and the PCF 304.
- N23: A reference point between the NWDAF 306 and the PCF 304.
- N36: A reference point between the UDR 307 and the PCF 304.
- N30: A reference point between the NEF 308 and the PCF 304.
- N29: A reference point between the NEF 302 and the SMF 303.
- N28: A reference point between the CHF 309 and the PCF 304.
- N40: A reference point between the CHF 309 and the SMF 303.
- N101: A reference point between a PCF instance that supports N15 and a PCF instance that supports N7.
- N102: A reference point between a PCF supporting N15 and an SMF.

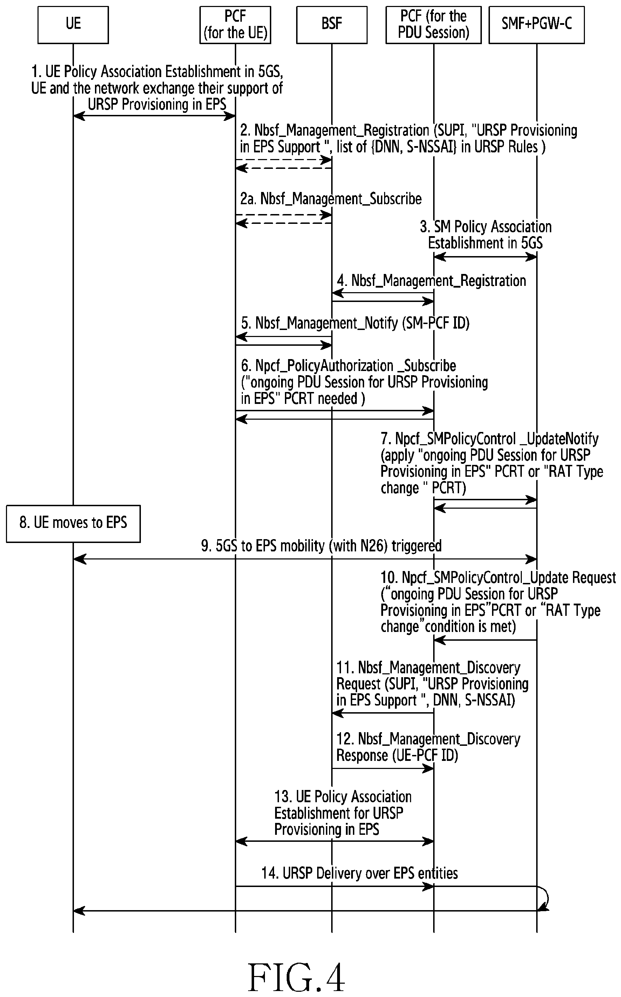

FIG. 4 is a diagram illustrating a method in which a core network transfers a UE policy to a UE in a wireless communication system (e.g., EPS/5GS interworking system) according to an embodiment of the disclosure. More specifically, this diagram illustrates a method in which a network determines a PDN connection to be used for transmitting a UE policy during a procedure in which a UE moves from a 5GS to an EPS.
1. In the 5GS, a UE policy association may be established between an AMF and a UE-PCF, and the UE-PCF may provide a UE policy to a UE via the AMF. The UE and the UE-PCF may exchange whether the UE supports a function of receiving a UE policy via the EPS, and whether the network supports a function of providing a UE policy via the EPS. The UE-PCF may be referred to as a PCF for the UE, a PCF for UE policy, or the like.
2. The UE-PCF may register with a binding support function (BSF) as a PCF in charge of a UE policy for the UE. The UE-PCF may register with the BSF by using an Nbsf_Management_Registration message, and may provide at least one of a subscription permanent identifier (SUPI), whether a function of providing a UE policy via the EPS is supported ("URSP Provisioning in EPS Support"), a list of DNN and S-NSSAI combination(s) included in a URSP rule that the UE-PCF provides to the UE in step 1.
   2a. When an event in which a PCF responsible for a policy (e.g., a UE policy, an AM policy, or an SM policy) for the UE indicated by the SUPI in step 2 is registered with the BSF occurs, the UE-PCF may request subscription from the BSF so as to receive a notification of the event. Alternatively, when an event in which a PCF responsible for a PDU session or PDN connection configured with a DNN and S-NSSAI combination (s) for the UE indicated by the SUPI in step 2, is registered with the BSF, the UE-PCF may request subscription from the BSF so as to receive a notification of the event. Step 2a may be performed in parallel with step 2 or separately performed.
3. An SMF+PGW-C and an SM-PCF (PCF for the PDU session) may establish an SM policy association during a PDU session establishment/modification procedure in the 5GS. The SM-PCF may also be referred to as a PCF for the PDU session, a PCF for the SMF, a PCF for SM, or a PCF for SM policy.
4. By using the SUPI of the UE associated with the target PDU session in step 3 and the DNN and S-NSSAI combination of the corresponding PDU session, the SM-PCF may register with the BSF that it is in charge of policy management of the PDU session for the SUPI. An Nbsf_Management_Registration message may be used. In this instance, the SM-PCF may further provide, to the BSF, a PDU session ID and/or the combination (s) of the DNN and S-NSSAI of the PDU session (if one or more PDU sessions, some or all of the PDU sessions) for the SUPI. If the SM-PCF corresponds to the same PCF as the UE-PCF, step 4 may be performed in a manner of updating content registered in the BSF (an Nbsf_Management_Update message may be used). When the SM-PCF and UE-PCF are the same PCF, this may indicate that the SM-PCF and UE-PCF are a single network function (NF) in logical or physical terms.
5. The BSF may notify the UE-PCF that an event in which the PCF responsible for policy management of the PDU session for the UE is registered with the BSF has occurred, based on the UE-PCF's subscription request in step 2 to 2a. This notification may use an Nbsf_Management_Notify message, and an ID of the corresponding PCF, that is, the SM-PCF's ID, may be provided.
6. The UE-PCF may request the SM-PCF indicated by the PCF ID received in step 5 to report whether the PDU session or PDN connection for the UE capable of receiving a UE policy in the EPS is continued (not released). The request for this report may be performed in a manner of informing that a policy control request trigger (PCRT) needs to be applied to the SMF+PGW-C. In addition, the UE-PCF may further provide, to the SM-PCF, the PDU session ID and/or the combination of the DNN and S-NSSAI to which the PCRT is to be applied. The provided PDU session ID and/or DNN and S-NSSAI combination may be the information provided from the BSF in step 5. The information provided from the UE-PCF to the SM-PCF in step 6 may be previously provided from the UE-PCF to the BSF in step 2. In this case, the BSF may provide the same to the SM-PCF as a response message when the SM-PCF transmits the registration request to the BSF in step 4, and in this instance, step 6 may be omitted. If the SM-PCF and the UE-PCF are the same PCF and the UE-PCF is aware of the same, the operation of transmitting the request to the SM-PCF in step 6 may be omitted or performed internally.
7. Upon receiving the request in step 6 (or receiving the request in step 4), the SM-PCF may provide, to the SMF+PGW-C, a PCRT for requesting a report on whether the PDU session or PDN connection for the UE capable of receiving a UE policy is continued (not released). For example, a PCRT may be provided to indicate that "a PDU session for providing a URSP in the EPS is continued", or a PCRT may be provided to indicate that "an RAT type is changed." Although the SM-PCF does not receive the request in step 6, if the SM-PCF determines, based on a session management policy, that it requires a report indicating that the PDU session for the UE may be continued as a PDN connection when the UE moves from the 5GS to the EPS, the SM-PCF may provide a PCRT indicating that "an RAT type is changed" to the SMF+PGW-C. If it is determined that the UE may receive a UE policy through the EPS via a different procedure, the SM-PCF may provide a PCRT indicating that "a PDU session for providing a URSP in the EPS is continued" or a PCRT indicating that "an RAT type is changed" to the SMF+PGW-C. When the UE moves from the 5GS to the EPS in the state in which the PDU session for the associated UE is not released in step 3 and the PDU session is continued as a PDN connection in the EPS, the SMF+PGW-C that receives at least one of the two PCRTs may inform the SM-PCF of a change of the UE's RAT type from NR (or other 5G RAT types) to E-UTRAN (or other EPS RAT types), or may provide the PDU session ID and/or the combination of the DNN and S-NSSAI so that the SM-PCF may recognize that the PDU session is continued as the PDN connection. In this instance, the PDU session and/or the combination of the DNN and S-NSSAI may be the information received from the UE-PCF in step 6, the information received from the BSF in step 4, or information determined by the SM-PCF based on another session management policy. When one or more target PDU sessions to which the PCRT is to be applied exist, the UE-PCF may select, as a target PDU session, a PDU session for which a UE policy (or UE policy container) has previously been provided, a PDU session managed by the SM-PCF and/or SMF+PGW-C, and for which a UE policy (or UE policy container) has previously been provided, a PDU session associated with a default PDN connection, or a PDU session determined according to a network configuration, or may randomly select one PDU session as a target PDU session, or may select all PDU sessions as target PDU sessions.
8. The UE may move a connection from 5GS to EPS.
9. A procedure in which the UE moves from the 5GS to the EPS (N26 connection may or may not exist) is initiated between the UE and the network.
10. During the procedure for moving from the 5GS to the EPS, the SMF+PGW-C may determine whether the condition of the PCRT is satisfied as described in step 7, and may inform the SM-PCF of whether the PDU session or PDN connection for the UE capable of receiving a UE policy is continued, and may provide the ID of the corresponding PDU session. For example, the SMF+PGW-C may provide the PDU session ID and/or the combination of the DNN and S-NSSAI of the corresponding PDU session while informing that the condition "a PDU session for providing a URSP in the EPS is continued" is satisfied, or may provide the PDU session ID and/or the combination of the DNN and S-NSSAI of the corresponding PDU session while informing that the condition "an RAT type is changed" is satisfied. When providing the PDU session ID and/or the combination of the DNN and S-NSSAI of the corresponding PDU session and informing the SM-PCF that the condition is satisfied, the SMF+PGW-C may further provide information indicating whether the SMF+PGW-C is an SMF+PGW-C capable of delivering a UE policy via the EPS. For example, information indicating "5GS to EPS mobility" (this information may be included in a UE policy container) may correspond to this. When determining whether to provide, to an SM-PCF, information regarding whether the SMF+PGW-C corresponds to an SMF+PGW-C capable of delivering a UE policy via the EPS, the following information may be referenced. For example, (1) when the SMF+PGW-C determines that transmission or reception of a signaling message may be performed with an SWG, an MME, and/or the UE using extended protocol configuration options (ePCO) (or protocol configuration options (PCO)) as a result of pre-negotiation/judgment, (2) when determines that transmission or reception may be performed using a UE policy (the UE policy may be included in a UE policy container) based on ePCO (or PCO), (3) when the PCRT of "a PDU session for providing a URSP is continued in the EPS" is applied in step 7, and/or (4) when ePCO including a UE policy container is received from the UE in step 9, the SMF+PGW-C may determine to provide information (which may be included in a UE policy container) notifying of "5GS to EPS mobility" to the SM-PCF. The ePCO (or PCO) is a field used to transmit/receive information related to a protocol configuration necessary to be exchanged between the UE and the PGW (or SMF+PGW-C), and may be provided in a container form which is uninterpretable by the E-UTRAN, the MME, the SGW, or the like that connect the UE and the PGW (or SMF+PGW-C). The UE policy container may be included as one of the content of the ePCO (or PCO) and provided when the UE and/or the SMF+PGW-C transmit/receive the same to each other. Based on the information, in step 14 described later, the UE-PCF and/or the SM-PCF may determine, when determining a target PDN connection or a target SMF+PGW-C for delivering a UE policy to the UE via the EPS, whether the SMF+PGW-C is an SMF+PGW-C capable of delivering the UE policy via the EPS. The SMF+PGW-C may determine an S-NSSAI based on an APN corresponding to a DNN when determining the DNN and S-NSSAI of a PDN connection in the case where the PDU session is continued as a PDN connection. In this case, when one or more S-NSSAIs are allowed for one APN, the SMF+PGW-C may select one S-NSSAI among the allowed S-NSSAIs and report the same to the SM-PCF. If the SMF+PGW-C is incapable of receiving a UE policy (e.g., when a failure or rejection message is received from the UE-PCF via the SM-PCF due to inability to establish a UE policy association and/or inability to provide UE policy information), the SMF+PGW-C may select another S-NSSAI allowed for the APN, and report a DNN and S-NSSAI combination again to receive the UE policy, through steps 11 to 14 described later. When a default PDN connection for the UE is continued, the SMF+PGW-C may determine the default PDN connection as a target for UE policy delivery, and may provide a corresponding DNN and S-NSSAI combination when reporting to the SM-PCF. When one or more PDU sessions/PDN connections exist, satisfying the PCRT condition, the SM+PGW-C may include information (which may be included in a UE policy container) indicating "5GS to EPS mobility" in a report on all or some of the PDU sessions/PDN connections. For example, when one or more target PDU sessions satisfying the PCRT exist, the SMF+PGW_C may select, as a target PDU session, a PDU session for which a UE policy (or UE policy container) has previously been provided, a PDU session managed by the SM-PCF and/or SMF+PGW-C, and for which a UE policy (or UE policy container) has previously been provided, a PDU session associated with a default PDN connection, or a PDU session determined according to a network configuration, or may randomly select one PDU session as a target PDU session, or may select all PDU sessions as target PDU sessions. The SMF+PGW-C may use an Npcf_SMPolicyControl_Update Request message in step 10.
11. The SM-PCF may determine, based on the message in step 10, that the corresponding PDU session is continued as a PDN connection in the EPS, and that a UE policy may be provided to the UE that uses the same, via EPS entities. For example, this may correspond to the case in which a report indicating that the PCRT condition of "a PDU session for providing a URSP in the EPS is continued" is satisfied is received in step 10, the case in which a UE policy container is received, or the case in which information indicating "5GS to EPS mobility" is received. The SM-PCF may request a UE-PCF ID from the BSF in order to search for a UE-PCF in charge of the corresponding UE policy in the 5GS. In this instance, an Nbsf_Management_Discovery request message may be used. This message may include at least one of the SUPI, information indicating that a UE policy may be provided in the EPS, and the ID of the PDU session (and/or the combination of the DNN and S-NSSAI of the PDU session) to be used for providing the UE policy. If the SM-PCF and the UE-PCF are the same PCF from the perspective of a logical or physical network function and the SM-PCF may be aware of the same, the SM-PCF may omit operation 11.
12. The BSF may provide the ID of a UE-PCF, which is a PCF responsible for a UE policy corresponding to the information provided in step 11.
13. The SM-PCF may request the UE-PCF received in step 12 to establish a UE policy association in order to provide a UE policy in the EPS. This request may include at least one of the SUPI used in steps 10 and 11, the PDU session ID (and/or the DNN and S-NSSAI combination of the PDU session), the UE policy container received in step 10, and the information indicating "5GS to EPS mobility" received in step 10. Based on the information (e.g., SUPI, PDU session ID (and/or the combination of DNN and S-NSSAI of the PDU session), UE policy container, and information indicating "5GS to EPS mobility") received in step 13, the UE-PCF may restore UE policy information and the PCRT for the UE from a UDR. The information may be generated in the 5GS before steps 8 to 9. When the UE-PCF receives the PDU session ID (and/or the DNN and S-NSSAI combination of the PDU session), the UE-PCF may identify that a UE policy needs to be delivered through a PDN connection corresponding to the PDU session while the UE is in the EPS. In addition, a plurality of PDU sessions (or PDN connections) for the corresponding SUPI exist, the UE-PCF may identify that this PDU session (or PDN connection) needs be selected as a target for UE policy delivery. When the UE-PCF determines that a PDU session (or a corresponding PDN connection) indicated by the PDU session ID, or the DNN and S-NSSAI combination provided by the SM-PCF is not suitable as a target session for delivering the UE policy through EPS, the UE-PCF may transmit a rejection to the SM-PCF, indicating inability to transmit the UE policy for the UE (the UE indicated by the SUPI provided by the SM-PCF) or inability to transmit the UE policy via the PDU session of the UE (the PDU session indicated by the PDU session ID or the DNN and S-NSSAI combination provided by the SM-PCF).In addition, the UE-PCF may inform the SM-PCF of whether to retry (e.g., retriable, do not retry) step 13 with another SUPI or another PDU session ID or DNN and S-NSSAI combination. When the SM-PCF and the UE-PCF are the same PCF and the SM-PCF is aware of this fact, the operation requested by the SM-PCF from the UE-PCF may be omitted, and the operation to be performed by the UE-PCF may be performed by the SM-PCF.
14. The UE-PCF may transmit the UE policy to the SMF+PGW-C via the SM-PCF. The UE policy may be provided in the form of being included in the UE policy container. When delivering the same to the SMF+PGW-C, the SM-PCF may use an Npcf_SMPolicyControl_Update Response message. When the SM-PCF receives, from the UE-PCF, a rejection due to inability to provide the UE policy for the UE (UE indicated by the SUPI provided by the SM-PCF), a rejection due to inability to provide the UE policy via the PDU session of the UE (indicated by the PDU session ID, or the DNN and S-NSSAI combination provided by the SM-PCF), or information indicating that step 13 is retriable using another SUPI or another PDU session ID, or another DNN and S-NSSAI combination, the SM-PCF may perform step 11 or step 13 again by using another SUPI or another PDU session ID or DNN and S-NSSAI combination received in step 10. When the SM-PCF receives a notification not to retry step 13 using another SUPI or another PDU session ID or DNN and S-NSSAI combination, even after receiving a rejection from the UE-PCF due to inability to provide the UE policy for the UE (the UE indicated by the SUPI provided by the SM-PCF) or due to inability to provide a UE policy via the PDU session of the UE (the PDU session indicated by the PDU session ID or the DNN and S-NSSAI combination provided by the SM-PCF), the SM-PCF may not perform step 11 or step 13 again. When the SM-PCF and the UE-PCF are the same PCF and the SM-PCF is aware of this fact, the operation requested by the SM-PCF from the UE-PCF may be omitted, and the operation to be performed by the UE-PCF may be performed by the SM-PCF. The SMF+PGW-C may provide the UE policy (or the UE policy container including the same) to the UE via the SGW, MME, and E-UTRAN. In this instance, the UE policy (or UE policy container) may be provided via the ePCO.
15. The UE may store the UE policy provided from the EPS network, and may configure a PDN connection, based on the same.

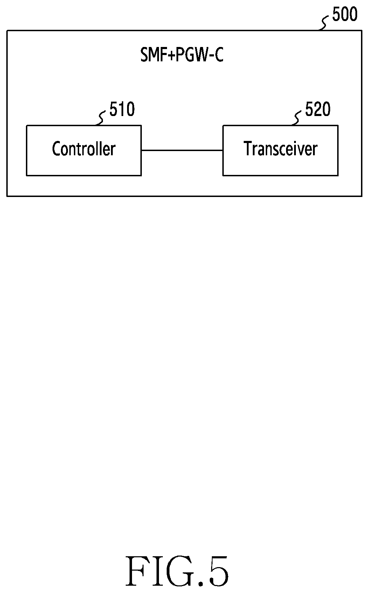

FIG. 5 illustrates a structure of a session management function + packet data network gateway-control entity (SMF+PGW-C) 500 according to an embodiment of the disclosure. The structure may be a network entity that performs a session management function and a packet data network gateway-control (PGW-C) function. The SMF+PGW-C 500 may be a concept including an SMF of 5GS and a PGW-C of EPS as one combo node. As illustrated in FIG. 5, the SMF+PGW-C 500 of the disclosure may include at least one controller (processor) 510 and a transceiver 520 including a receiver and a transmitter. The SMF+PGW-C 500 may include a memory (not illustrated). The transceiver 520 and the memory may be connected to the at least one controller 510 so as to operate under the control of the at least one controller 510.

The at least one controller 510 may control a series of processes so that the operation of the application function described in FIG. 1 to FIG. 4 of the disclosure may be performed. The transceiver 520 may transmit and receive signals to and from a UE and other network devices (600 or the like). The signal may include a control message, data information, or the like.

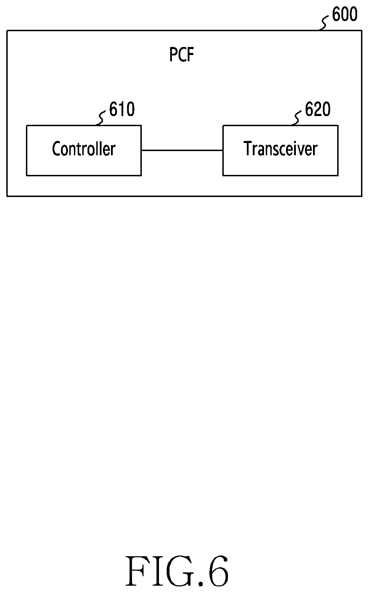

FIG. 6 illustrates a structure of a PCF 600 according to an embodiment of the disclosure. The structure may be an entity that performs a policy control function. The PCF 600 may be distinguished as an SM-PCF that is responsible for a session management policy (SM policy), and a UE-PCF that is responsible for mobility management policy (AM policy) and/or UE policy. The SM-PCF and the UE-PCF may be configured as separate devices, and may be formed to be logically distinguished although configured as the same device. As illustrated in FIG. 6, the PCF 600 of the disclosure may include at least one controller (processor) 610 and a transceiver 620 including a receiver and a transmitter. The application function may include a memory (not illustrated). The transceiver 620 and the memory may be connected to the at least one controller 610 so as to operate under the control of the at least one controller 610.

The at least one controller 610 may control a series of processes so that the operation of the application function described in FIG. 1 to FIG. 4 of the disclosure may be performed. The transceiver 620 may transmit and receive signals to and from a UE and other network devices (500 or the like). The signal may include a control message, data information, or the like.

The network device of the disclosure may include all devices corresponding to network functions, such as AUSF, NEF, NF, UDM, AMF, UPF, SMF, NRF, PCF, SM-PCF, UE-PCF, UDM+HSS, UDR, and the like, and each of the network functions may be independently configured.

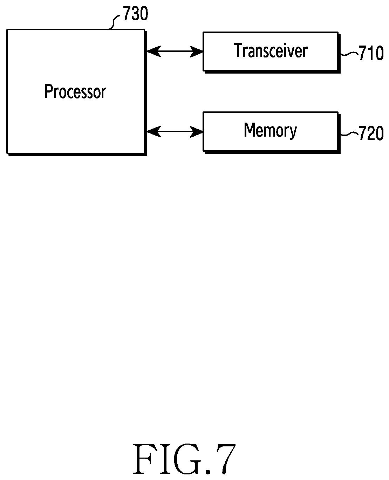

FIG. 7 illustrates the structure of a UE according to an embodiment of the disclosure.

Referring to FIG. 7, the UE according to an embodiment may include a transceiver 710, a memory 720, and a processor730. The transceiver 710, the memory 720, and the processor 730 of the UE may operate according to the above-described communication methods of the UE. However, components of the UE are not limited thereto. For example, the UE may include a larger or smaller number of components than the above-described components. In addition, the processor 730, the transceiver 710, and the memory 720 may be implemented as a single chip. In addition, the processor 730 may include at least one processor. Furthermore, the UE in FIG. 7 may correspond to the UEs in FIGS. 1, 2, and 4.

The transceiver 710 refers to a UE receiver and a UE transmitter as a whole, and may transmit/receive signals with base stations or network entities. The signals transmitted/received with base stations or network entities may include control information and data. The transceiver 710 may include an RF transmitter for up-converting and amplifying the frequency of a transmitted signal and an RF receiver for low-noise amplifying and down-converting the frequency of a received signal. However, this is only an example of the transceiver 710, and the components of the transceiver 710 are not limited to the RF transmitter and the RF receiver.

In addition, the transceiver 710 may receive signals through a radio channel, output the same to the processor 730, and transmit signals output from the processor 730 through the radio channel. The memory 720 may store programs and data necessary for the operation of the UE. In addition, the storage 720 may store control information or data included in signals acquired by the UE. The memory 720 may be storage media, such as a read-only memory (ROM), a random access memory (RAM), a hard disk, a CD-ROM, and a DVD, or a combination of storage media.

The processor 730 may control a series of processes to operate the UE. For example, the transceiver 710 may receive data signals including control signals, transmitted by base stations or network entities, and the processor 730 may determine results of receiving the control signals and the data signals transmitted by the base stations or network entities.

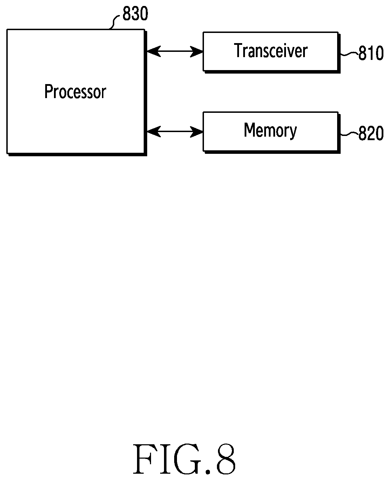

FIG. 8 illustrates a structure of a network entity according to an embodiment of the disclosure.

Referring to FIG. 8, the network entity according to an embodiment may include a transceiver 810, a memory 820, and a processor 830. The transceiver 810, the memory 820, and the processor 830 of the network entity may operate according to the above-described communication methods of the network entity. However, components of the network entity are not limited thereto. For example, the network entity may include a larger or smaller number of components than the above-described components. Also, the processor 830, the transceiver 810, and the memory 820 may be implemented as a single chip. In addition, the processor 830 may include at least one processor. Furthermore, the network entity in FIG. 8 may correspond to the network entities described in FIGS. 1 to 6.

The transceiver 810 refers to a UE receiver and a UE transmitter as a whole, and may transmit/receive signals with UEs, base stations, or other network entities. The signals transmitted/received with UEs, base stations, or other network entities may include control information and data. The transceiver 810 may include an RF transmitter for up-converting and amplifying the frequency of a transmitted signal and an RF receiver for low-noise amplifying and down-converting the frequency of a received signal. However, this is only an example of the transceiver 810, and the components of the transceiver 810 are not limited to the RF transmitter and the RF receiver. In addition, the transceiver 810 may receive signals through a radio channel, output the same to the processor 830, and transmit signals output from the processor 830 through the radio channel.

The memory 820 may store programs and data necessary for operations of the network entity. In addition, the memory 820 may store control information or data included in signals acquired by the network entity. The memory 820 may be storage media, such as a read-only memory (ROM), a random access memory (RAM), a hard disk, a CD-ROM, and a DVD, or a combination of storage media.

The processor 830 may control a series of processes to operate the network entity as described above. For example, the transceiver 810 may receive data signals including control signals, transmitted by UEs, base stations, or network entities, and the processor 830 may determine results of receiving the control signals and the data signals transmitted by the UEs, base stations, or network entities.

The embodiments of the disclosure described and shown in the specification and the drawings are merely particular examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived based on the technical idea of various embodiments of the disclosure. Also, the above respective embodiments may be employed in combination, as necessary.

## Claims

1. A method performed by a first policy control function (PCF) entity for a user equipment (UE) in a wireless communication system, the method comprising:
transmitting, to a binding support function (BSF) entity, a first message for requesting registration;
transmitting, to the BSF entity, a second message for requesting subscription to an event in which a second PCF for session management is registered with the BSF entity;
receiving, from the BSF entity, a third message for notifying that the second PCF is registered with the BSF entity; and
transmitting, to the second PCF, a fourth message for requesting a report on whether a protocol data unit (PDU) session or packet data network (PDN) connection for a UE capable of receiving a UE policy in an evolved packet system (EPS) is continued.

2. The method of claim 1, wherein the first message comprises at least one of a subscription permanent identifier (SUPI), whether a function of providing a UE policy, based on the evolved packet system (EPS), is supported, and a list of combinations of data network names (DNNs) and single-network slice selection assistance information (S-NSSAI).

3. The method of claim 1, wherein the third message comprises an identifier indicating the second PCF.

4. The method of claim 1, wherein the fourth message comprises an indication for applying a policy control request trigger (PCRT) to a combo node of a session management function (SMF) entity and a packet data network-control plane (PGW-C) entity, and at least one of a PDU session identifier for application of the PCRT and a combination of a DNN and S-NSSAI.

5. A method performed by a second PCF for session management in a wireless communication system, the method comprising:
establishing a session management policy association with a network entity;
transmitting, to a binding support function (BSF) entity, a first message for requesting registration;
receiving, from a first PCF for a user equipment (UE), a second message for requesting a report on whether a protocol data unit (PDU) session or packet data network (PDN) connection for a UE capable of receiving a UE policy in an evolved packet system (EPS) is continued; and
transmitting, to the network entity, a third message for requesting a report on whether the PDU session or the PDN connection is continued.

6. The method of claim 5, wherein the first message comprises at least one of an identifier of the PDU session, a subscription permanent identifier (SUPI) of a UE associated with the PDU session, and a combination of a data network name (DNN) and single-network slice selection assistance information (S-NSSAI) of the PDU session.

7. The method of claim 5, wherein the second message comprises an indication for applying a policy control request trigger (PCRT) to the network entity, and at least one of a PDU session identifier for application of the PCRT, and a combination of a DNN and S-NSSAI, and
wherein the network entity is a combo node of a session management function (SMF) entity and a packet data network-control plane (PGW-C) entity.

8. The method of claim 7, wherein the PCRT comprises a PCRT indicating that a protocol data unit (PDU) session for a UE capable of receiving a UE policy in the EPS is continued or a radio access technology (RAT) type of a UE is changed.

9. A first policy control function (PCF) entity for a user equipment (UE) in a wireless communication system, the first PCF comprising:
a transceiver; and
a controller connected to the transceiver,
wherein the controller is configured to:
transmit, to a binding support function (BSF) entity, a first message for requesting registration;
transmit, to the BSF entity, a second message for requesting subscription to an event in which a second PCF for session management is registered with the BSF entity;
receive, from the BSF entity, a third message for notifying that the second PCF is registered with the BSF entity; and
transmit, to the second PCF, a fourth message for requesting a report on whether a protocol data unit (PDU) session or packet data network (PDN) connection for a UE capable of receiving a UE policy in an evolved packet system (EPS) is continued.

10. The first PCF of claim 9, wherein the first message comprises at least one of a subscription permanent identifier (SUPI), whether a function of providing a UE policy, based on the evolved packet system (EPS), is supported, and a list of combinations of data network names (DNNs) and single-network slice selection assistance information (S-NSSAI).

11. The first PCF of claim 9, wherein the third message comprises an identifier indicating the second PCF.

12. The first PCF of claim 9, wherein the fourth message comprises an indication for applying a policy control request trigger (PCRT) to a combo node of a session management function (SMF) entity and a packet data network-control plane (PGW-C) entity, and at least one of a PDU session identifier for application of the PCRT and a combination of a DNN and S-NSSAI.

13. A second policy control function (PCF) entity for session management in a wireless communication system, the second PCF comprising:
a transceiver: and
a controller connected to the transceiver,
wherein the controller is configured to:
establish a session management policy association with a network entity;
transmit, to a binding support function (BSF) entity, a first message for requesting registration;
receive, from a first PCF for a user equipment (UE), a second message for requesting a report on whether a protocol data unit (PDU) session or packet data network (PDN) connection for a UE capable of receiving a UE policy in an evolved packet system (EPS) is continued; and
transmit, to the network entity, a third message for requesting a report on whether the PDU session or the PDN connection is continued.

14. The second PCF of claim 13, wherein the first message comprises at least one of an identifier of the PDU session, a subscription permanent identifier (SUPI) of a UE associated with the PDU session, and a combination of a data network name (DNN) and single-network slice selection assistance information (S-NSSAI) of the PDU session.

15. The second PCF of claim 13, wherein the second message comprises an indication for applying a policy control request trigger (PCRT) to the network entity, and at least one of a PDU session identifier for application of the PCRT and a combination of a DNN and S-NSSAI, and
wherein the PCRT comprises a PCRT indicating that a protocol data unit (PDU) session for a UE capable of receiving a UE policy in the EPS is continued or a radio access technology (RAT) type of a UE is changed, and
wherein the network entity is a combo node of a session management function (SMF) entity and a packet data network-control plane (PGW-C) entity.
